# FASCICULE DE BREVET EUROPEEN

(11) **EP 3 581 821 B1**
(45) Date de publication et mention de la délivrance du brevet: **24.06.2020**
(21) Numéro de dépôt: 19171995.4
(22) Date de dépôt: 30.04.2019
(51) Int. Cl.: F16D 21/06, F16D 13/52, F16D 13/58, F16D 13/70, F16D 25/0638, F16D 25/12

(54) **EMBRAYAGE MULTIDISQUE**
LAMELLENKUPPLUNG
MULTI-PLATE CLUTCH

(30) Priorité: 14.06.2018 FR 1855216
(43) Date de publication de la demande: 18.12.2019
(73) Titulaire: VALEO EMBRAYAGES, 80009 Amiens (FR)
(72) Inventeur: GUINOT, Thierry, 95892 CERGY PONTOISE (FR); BOUGARD, Jean-François, 95892 CERGY PONTOISE (FR)
(74) Mandataire: Vincent, Catherine Marie Marguerite

(56) Documents cités:
- WO-A1-2018/024997
- DE-T5-112016 002 820
- FR-A1- 3 056 660
- US-A1- 2010 078 282

## Description

### Domaine technique

L'invention se rapporte au domaine des embrayages de véhicule automobile, notamment des embrayages multidisques.

L'invention concerne plus particulièrement le centrage de l'organe de transmission de force d'un tel embrayage.

### Arrière-plan technologique

Le document US2015083546 divulgue un double embrayage pour une transmission à double embrayage comprenant un arbre menant, un premier embrayage à friction, un deuxième embrayage à friction, un premier arbre mené, et un deuxième arbre mené. Chacun des embrayages du double embrayage est un embrayage multidisque dit humide, ce qui signifie que les disques de l'embrayage baignent dans de l'huile.

Le document WO 2018/024997 A1 divulgue un embrayage multidisque, notamment pour véhicule automobile, comprenant: un premier porte-disque, un deuxième porte-disque, un ensemble multidisque, au moins deux plateaux respectivement disposés de part et d'autre de l'au moins un disque de friction, un organe d'actionnement et un organe de transmission de force, dans lequel l'organe de transmission de force comprend au moins deux portions radiales faisant saillies radialement de l'organe de transmission.

Chaque embrayage multidisque comporte un porte-disque d'entrée solidaire en rotation d'un élément d'entrée, par exemple le vilebrequin du moteur, un porte-disque de sortie solidaire en rotation d'un élément de sortie, par exemple pour le premier embrayage le premier arbre mené et pour le deuxième embrayage le deuxième arbre mené, et un ensemble multidisque comprenant une pluralité de disques de friction solidaire en rotation autour de l'axe X de l'un des porte-disque d'entrée et de sortie, et une pluralité de plateaux respectivement disposés de part et d'autre de chaque disque de friction, solidaires en rotation autour de l'axe X de l'autre des porte-disque d'entrée et de sortie. Des garnitures de friction sont disposées entre les plateaux. Les disques de friction et les plateaux sont mobiles axialement de sorte qu'ils puissent se rapprocher les uns des autres.

Chaque embrayage comporte également un organe d'actionnement et un organe de transmission de force. L'organe de transmission de force est mobile axialement pour transmettre un effort d'embrayage généré par l'organe d'actionnement vers l'ensemble multidisque depuis une position débrayée vers une position embrayée. En effet, une extrémité de l'organe de transmission de force appuie tout autour de l'axe X sur un plateau de l'ensemble multidisque de manière à ce que les plateaux pressent les disques de friction pour transmettre le couple.

Afin que l'organe de transmission de force applique sur l'ensemble multidisque l'effort d'embrayage de manière uniforme autour de l'axe X, l'organe de transmission de force est centré par rapport à l'ensemble multidisque et par rapport au porte-disque sur lequel les plateaux sont solidaires.

Toutefois, dans les documents de l'art antérieur, le centrage de l'organe de transmission de force nécessite une conception particulière de l'embrayage.. En effet par exemple, dans le document cité ci-dessus, le porte disque extérieure de chacun des embrayages multi-disques est centré au moyen d'une portion de support qui s'étend radialement vers l'intérieur et qui est disposé du côté de l'embrayage par lequel l'organe de transmission de force vient appliquer l'effort d'embrayage. Dans un tel cas, l'organe de transmission de force présente une pluralité de doigts d'orientation axiale, régulièrement répartis autour de l'axe X et passant chacun au travers de la portion de support à la faveur d'une ouverture dédiée équipée d'un insert. Les doigts d'orientation axiale présentent une surface externe qui coopère avec un rebord externe d'un insert rapporté dans l'une des ouvertures de manière à centrer axialement l'organe de transmission de force.

Or, un tel centrage est complexe puisqu'il nécessite l'utilisation d'inserts et requiert à ce que l'organe de transmission d'effort soit pré-positionné angulairement par rapport au porte-disque extérieure lors de l'assemblage afin de permettre l'insertion des doigts dans les inserts.

Toutefois, un tel centrage nécessite que la portion de support du porte-disque extérieur soit disposée du côté de l'embrayage par lequel l'organe de transmission d'effort applique l'effort embrayage. Or, dans certaines circonstances, notamment afin de répondre à des contraintes de compacité du double embrayage, la portion de support du porte disque extérieur et l'organe de transmission d'effort sont disposés axialement de part et d'autre de l'embrayage, ce qui n'autorise pas un tel centrage.

### Résumé

Une idée à la base de l'invention est de simplifier et améliorer le centrage de l'organe de transmission de force par rapport à l'ensemble multidisque et par rapport à l'un des porte-disque d'entrée et porte-disque de sortie dans un embrayage multidisque.

Une autre idée à la base de l'invention est de faciliter la fabrication de l'embrayage multidisque, notamment au niveau de l'étape de centrage de l'organe de transmission de force.

Selon un mode de réalisation, l'invention fournit un embrayage multidisque, notamment pour véhicule automobile, présentant un axe X de rotation et comprenant :
- un premier porte-disque,
- un deuxième porte-disque,
- un ensemble multidisque comprenant au moins un disque de friction solidaire en rotation autour de l'axe X du deuxième porte-disque, au moins deux plateaux respectivement disposés de part et d'autre de l'au moins un disque de friction, les deux plateaux étant solidaires en rotation autour de l'axe X du premier porte-disque ;
- un organe d'actionnement configuré pour délivrer un effort d'embrayage ; et
- un organe de transmission de force mobile en translation selon l'axe X qui coopère d'une part avec l'organe d'actionnement et d'autre part avec l'un des plateaux de manière à transmettre l'effort d'embrayage de l'organe d'actionnement vers l'ensemble multidisque ;
dans lequel l'organe de transmission de force comprend au moins deux portions radiales faisant saillies radialement de l'organe de transmission en direction du premier porte-disque, lesdites portions radiales étant radialement en contact contre le premier porte-disque de manière à centrer radialement l'organe de transmission de force par rapport au premier porte-disque.

Grâce à ces caractéristiques, l'organe de transmission de force est centré simplement à l'aide des portions radiales en contact avec le premier porte-disque. En effet, les portions radiales permettent à l'organe de transmission de force d'être placé précisément dans la direction radiale de manière à ce que l'organe de transmission de force transmette l'effort d'embrayage uniformément et continument au cours du temps à l'embrayage multidisque sans risquer de se décentrer.

En outre, un tel centrage ne requiert pas que l'organe de transmission de force et la portion de support du porte-disque extérieur soit disposé du même côté de l'embrayage.

Selon d'autres modes de réalisation avantageux, un tel embrayage multidisque peut présenter une ou plusieurs des caractéristiques suivantes.

Selon un mode de réalisation, l'organe de transmission de force comprend au moins trois portions radiales, de préférence exactement trois portions radiales.

Selon un mode de réalisation, les portions radiales sont réparties régulièrement tout autour de l'axe X sur l'organe de transmission de force.

Ainsi, le centrage de l'organe de transmission de force se fait uniformément autour de l'axe X grâce à la répartition régulière des portions radiales.

Selon un mode de réalisation, l'organe de transmission de force comprend trois portions radiales espacées chacun d'un angle d'environ 120° autour de l'axe X.

Selon un mode de réalisation, l'organe de transmission de force est de forme annulaire et comprend une jupe cylindrique intérieure d'orientation axiale, une surface d'appui d'orientation radiale situé à une extrémité de la jupe cylindrique intérieure et étant en contact avec un élément de l'organe d'actionnement, une jupe cylindrique extérieure d'orientation axiale apte à venir en contact axialement avec un plateau de l'ensemble multidisque pour transmettre l'effort d'embrayage, et une portion de liaison reliant la jupe cylindrique intérieure et la jupe cylindrique extérieure.

Selon un mode de réalisation, l'une, plusieurs ou chacune des portions radiales fait saillie radialement de la jupe cylindrique intérieure.

Selon un mode de réalisation, l'une, plusieurs ou chacune des portions radiales est un bossage réalisé par emboutissage de la jupe cylindrique intérieure.

Grâce à ces caractéristiques, le bossage permet à la fois de centrer l'organe de transmission de force mais également de ne pas gêner la circulation de fluide à l'intérieur de l'embrayage.

Selon un mode de réalisation, l'organe de transmission de force est de forme annulaire et comprend une surface d'appui d'orientation radiale située à une extrémité de la jupe cylindrique intérieure et étant en contact avec un élément de l'organe d'actionnement et une portion extérieure d'orientation axiale apte à venir en contact axialement avec un plateau de l'ensemble multidisque pour transmettre l'effort d'embrayage.

Selon un mode de réalisation, l'une, plusieurs ou chacune des portions radiales fait saillie radialement d'une surface extérieure de la portion extérieure.

Selon un mode de réalisation, la portion extérieure est une jupe cylindrique extérieure.

Selon un mode de réalisation, le premier porte-disque est munie d'une section cannelée avec des cannelures sur tout le pourtour de la section, et l'une, plusieurs ou chacune des portions radiales de l'organe de transmission de force est logée dans au moins l'une des cannelures.

Ainsi, les portions radiales permettent également d'accoupler en rotation l'organe de transmission de force avec le premier porte-disque ce qui évite qu'il y ait une vitesse relative entre les deux éléments ou une usure par frottement.

Selon un mode de réalisation, l'une, plusieurs ou chacune des portions radiales est une patte réalisée par découpe de matière, la patte ayant une forme complémentaire à au moins l'une des cannelures du premier porte-disque

Selon un mode de réalisation, la patte comporte deux éléments faisant saillie séparés par un creux, les deux éléments faisant saillie se logeant dans deux cannelures adjacentes du premier porte-disque.

Selon un mode de réalisation, l'organe d'actionnement est une butée hydraulique comprenant un piston annulaire et une butée tournante, de préférence un palier à roulement, portée par le piston et coopérant avec la surface d'appui de l'organe de transmission de force.

Selon un mode de réalisation, le premier porte-disque est un porte disque d'entrée et le deuxième porte-disque est un porte-disque de sortie.

Selon un mode de réalisation, le premier porte-disque est un porte disque de sortie et le deuxième porte-disque est un porte-disque d'entrée.

Selon un mode de réalisation, l'organe de transmission de force est disposé au moins partiellement radialement à l'intérieur de l'ensemble multidisque et du premier porte-disque.

Selon un mode de réalisation, le premier porte-disque comporte une portion de support d'orientation radiale et la portion de support d'orientation radiale et l'organe de transmission de force étant disposé axialement de part et d'autre de l'ensemble multidisque.

Selon un mode de réalisation, l'invention fournit un triple embrayage multidisque, notamment pour véhicule automobile, comprenant :
- un embrayage d'entrée
- un premier embrayage de sortie
- un deuxième embrayage de sortie
dans lequel l'un parmi l'embrayage d'entrée, le premier embrayage de sortie et le deuxième embrayage de sortie est un embrayage multidisque comme décrit ci-dessus.

### Brève description des figures

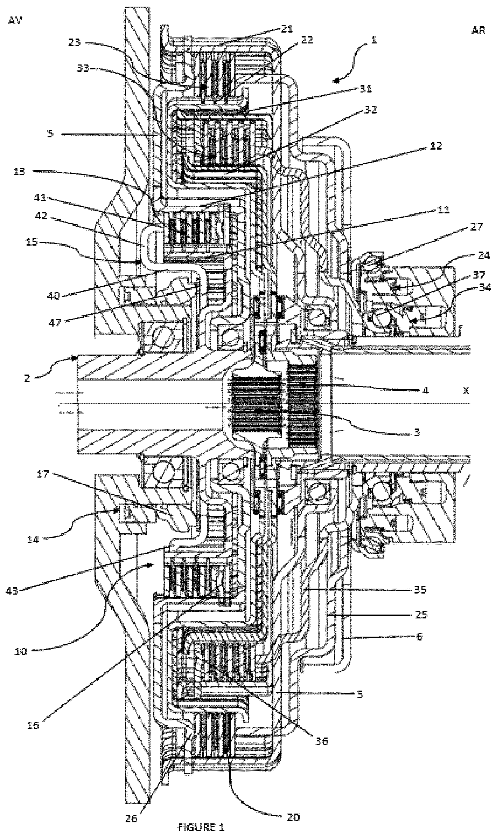

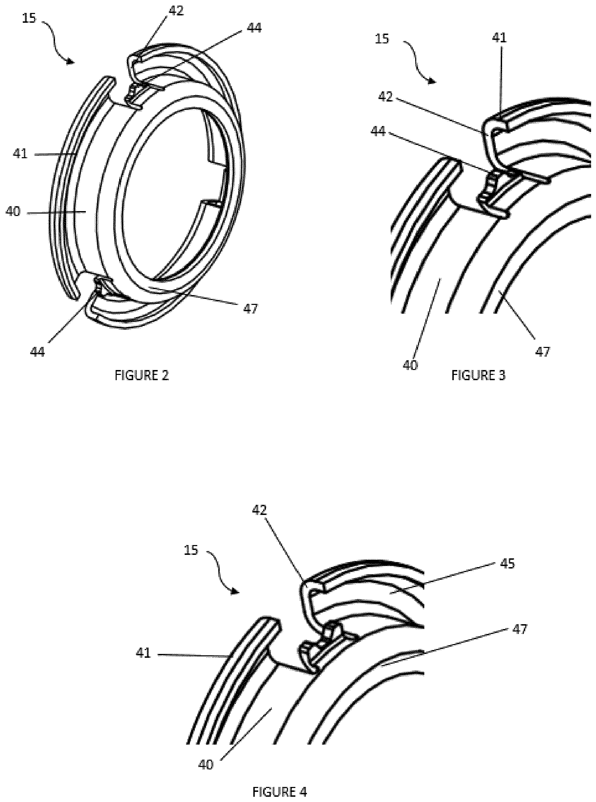

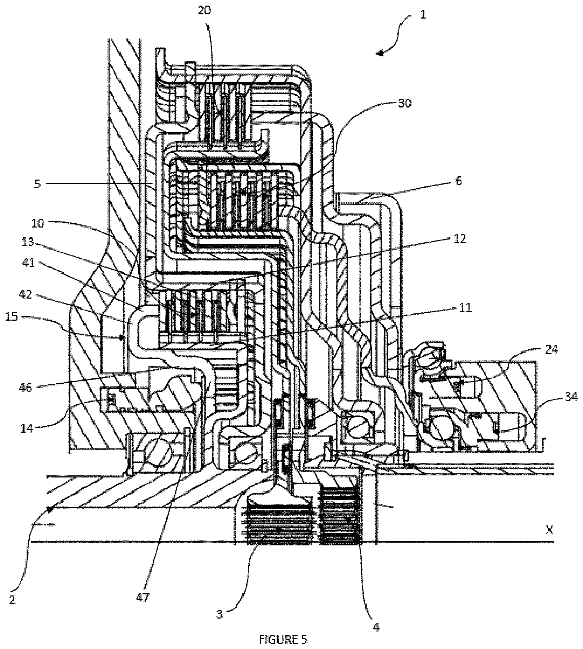

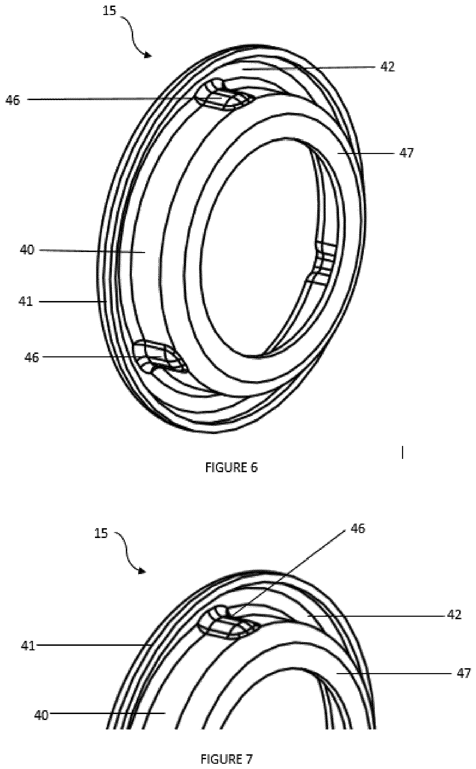

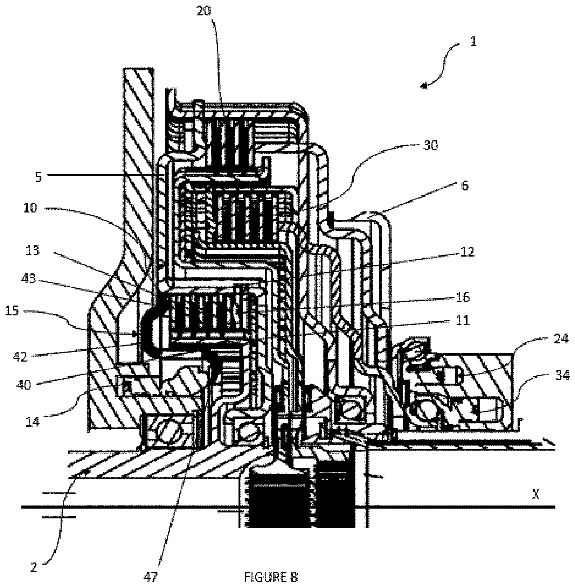

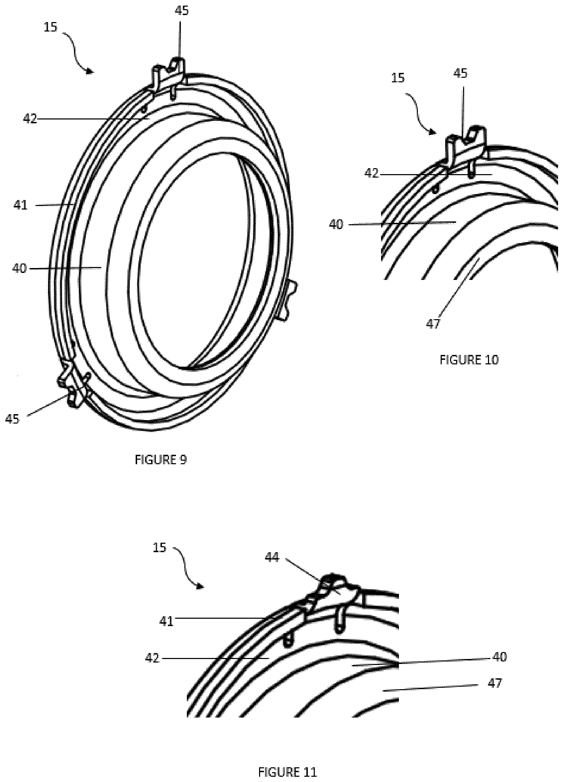

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
- **La** **figure 1** représente une vue en coupe partielle d'un triple embrayage humide pour architecture hybride selon un premier mode de réalisation.
- **La** **figure 2** représente une vue en perspective d'un organe de transmission de force d'un embrayage selon le premier mode de réalisation.
- **La** **figure 3** est une vue de détail de la figure 2.
- **La** **figure 4** représente une vue de détail d'une variante d'organe de transmission de force d'un embrayage selon le premier mode de réalisation.
- **La** **figure 5** représente une vue en coupe partielle d'un triple embrayage humide pour architecture hybride selon un deuxième mode de réalisation.
- **La** **figure 6** représente une vue en perspective d'un organe de transmission de force d'embrayage selon le deuxième mode de réalisation.
- **La** **figure 7** est une vue de détail de la figure 6.
- **La** **figure 8** représente une vue en coupe partielle d'un triple embrayage humide pour architecture hybride selon un troisième mode de réalisation.
- **La** **figure 9** représente une vue en perspective d'un organe de transmission de force d'embrayage selon le troisième mode de réalisation.
- **La** **figure 10** est une vue de détail de la figure 9.
- **La** **figure 11** représente une vue de détail d'une variante de l'organe de transmission de force d'embrayage selon le troisième mode de réalisation.

### Description détaillée de modes de réalisation

Dans la description et les revendications, on utilisera, les termes "externe" et "interne" ainsi que les orientations "axiale" et "radiale" pour désigner, selon les définitions données dans la description, des éléments du dispositif de transmission de couple. Par convention, l'orientation "radiale" est dirigée orthogonalement à l'axe X de rotation des différents embrayages déterminant l'orientation "axiale" et, de l'intérieur vers l'extérieur en s'éloignant dudit axe X, l'orientation "circonférentielle" est dirigée orthogonalement à l'axe X et orthogonalement à la direction radiale. Les termes "externe" et "interne" sont utilisés pour définir la position relative d'un élément par rapport à un autre, par référence à l'axe X, un élément proche de l'axe est ainsi qualifié d'interne par opposition à un élément externe situé radialement en périphérie. Par ailleurs, les termes "arrière" AR et "avant" AV sont utilisés pour définir la position relative d'un élément par rapport à un autre selon la direction axiale, un élément destiné à être placé proche du moteur thermique étant désigné par avant et un élément destiné à être placé proche de la boîte de vitesses étant désigné par arrière.

Les figures 1, 5 et 8 représentent une pluralité de modes de réalisation d'un dispositif de transmission de couple 1 comprenant :
- un élément d'entrée de couple 2 apte à être couplé en rotation à un vilebrequin d'un moteur thermique (non représenté),
- un premier élément de sortie de couple 3, apte à être couplé en rotation à un premier arbre d'entrée d'une boîte de vitesses (non représenté),
- un deuxième élément de sortie de couple 4, apte à être couplé en rotation à un deuxième arbre d'entrée d'une boîte de vitesses (non représenté) et
- un élément intermédiaire 5 agencé entre l'élément d'entrée de couple 2 et les premier 3 et deuxième 4 élément de sortie de couple, selon le chemin de transmission du couple.

Dans les modes de réalisation représentés sur les figures 1, 5 et 8, les premier et deuxième éléments de sortie 3, 4 comprennent un voile et un moyeu dont la périphérie interne est cannelée et apte à coopérer, respectivement avec un premier et un deuxième arbre de boite de vitesses. Dans l'exemple considéré, les premier et deuxième arbres de boite sont coaxiaux.

Le dispositif 1 comprend également un embrayage d'entrée 10 accouplant sélectivement et par friction l'élément d'entrée 2 et l'élément intermédiaire 5.

L'embrayage d'entrée 10 comprend :
- un porte-disque d'entrée 11 solidaire en rotation de l'élément d'entrée 2,
- un porte-disque de sortie 12 solidaire en rotation de l'élément intermédiaire 5, et
- un ensemble multidisque 13 comprenant plusieurs disques de friction, ici quatre, solidaires en rotation du porte-disque d'entrée 11, plusieurs plateaux respectivement disposés de part et d'autre de chaque disque de friction, solidaires en rotation du porte-disque de sortie 12. Les disques de friction comportent des garnitures de friction fixées de chaque côté de leur disque support. Dans une position embrayée de l'embrayage 10, les plateaux pincent les garnitures de friction de manière à transmettre un couple entre le porte-disque d'entrée 11 et le porte-disque de sortie 12.

Chaque porte-disque 11, 12 synchronise en rotation l'ensemble des plateaux et l'ensemble des disques de friction. Chaque portes-disque 11, 12 comporte une jupe cylindrique sur laquelle sont montées les plateaux ou les disques de friction.

Les disques de friction de l'ensemble multidisque 13 comportent des cannelures sur leur périphérie radialement intérieure qui coopèrent avec des cannelures situées sur la périphérie radialement extérieure de la jupe cylindrique du porte-disque d'entrée 11. Les disques de friction sont donc radialement à l'extérieur de la jupe cylindrique.

Les plateaux de l'ensemble multidisque 13 comportent des cannelures sur leur périphérie radialement extérieure qui coopèrent avec des cannelures situées sur la périphérie radialement intérieure de la jupe cylindrique du porte-disque de sortie 12.

L'embrayage d'entrée comprend également un élément de réaction 16 présentant une portion annulaire d'orientation radiale et une zone d'appui faisant saillie d'une face de la portion annulaire. La zone d'appui de l'élément de réaction 16 a pour but de servir d'appui à l'ensemble multidisque et notamment au plateau adjacent à l'élément de réaction 16 dans la position embrayée. L'élément de réaction 16 est solidaire en rotation autour de l'axe X et axialement selon l'axe X au porte disque d'entrée 11.

Le dispositif de transmission de couple 1 comprend également un premier embrayage de sortie 20 accouplant sélectivement et par friction l'élément intermédiaire 5 et le premier élément de sortie 3 et un deuxième embrayage de sortie 30, accouplant sélectivement et par friction l'élément intermédiaire 5 et le deuxième élément de sortie 4. Le dispositif de transmission de couple 1 est donc ici un triple embrayage 1.

Le premier embrayage de sortie 20 comprend :
- un porte-disque d'entrée 21 solidaire en rotation de l'élément intermédiaire 5,
- un porte-disque de sortie 22 solidaire en rotation du premier élément de sortie et,
- un ensemble multidisque 23 comprenant plusieurs disques de friction, ici trois, solidaires en rotation du porte-disque de sortie 22, plusieurs plateaux respectivement disposés de part et d'autre de chaque disque de friction, solidaires en rotation du porte-disque d'entrée 21. Les disques de friction comportent des garnitures de friction fixées de chaque côté de leur disque support. Dans une position embrayée de l'embrayage 20, les plateaux pincent les garnitures de friction de manière à transmettre un couple entre le porte-disque d'entrée 21 et le porte-disque de sortie 22.

Chaque portes-disque 21, 22 comporte une jupe cylindrique sur laquelle sont montées les plateaux ou les disques de friction.

Les disques de friction de l'ensemble multidisque 23 comportent des cannelures sur leur périphérie radialement intérieure qui coopèrent avec des cannelures situées sur la périphérie radialement extérieure de la jupe cylindrique du porte-disque de sortie 22.

Les plateaux de l'ensemble multidisque 23 comportent des cannelures sur leur périphérie radialement extérieure qui coopèrent avec des cannelures situées sur la périphérie radialement intérieure de la jupe cylindrique du porte-disque d'entrée 21.

Le premier embrayage de sortie 20 comprend également un élément de réaction 26 présentant une portion annulaire d'orientation radiale et un zone d'appui situé sur une face de la portion annulaire et faisant saillie de ladite face de la portion annulaire. La zone d'appui de l'élément de réaction 26 a pour but de servir de point d'appui à l'ensemble multidisque et notamment au plateau adjacent à l'élément de réaction 26 dans la position embrayée. L'élément de réaction 26 est fixé en rotation autour de l'axe X et axialement selon l'axe X au porte disque d'entrée 21.

Le deuxième embrayage de sortie 30 est formé de manière analogue au premier embrayage de sortie 20. Le deuxième embrayage de sortie 30 comprend donc similairement un porte-disque d'entrée 31, un porte-disque de sortie 32, un ensemble multidisque 33, un élément de réaction 36 muni d'une portion annulaire 37 et d'une zone d'appui 38.

Chaque porte-disque 11, 12, 21, 22, 31, 32 peut synchroniser en rotation l'ensemble des plateaux ou l'ensemble des disques de friction qui lui sont associés.

Selon différents modes de réalisation, les plateaux sont solidaires en rotation des porte-disque d'entrée 11, 21, 31 et les disques de friction sont solidaires en rotation des porte-disque de sortie 12, 22, 32, comme représenté sur les figures 1 et 5. En variante, les plateaux sont solidaires en rotation du porte-disque de sortie 12, 22, 32 et les disques sont solidaires en rotation du porte-disque d'entrée 11, 21, 31, comme représenté pour l'embrayage d'entrée en figure 8.

Les embrayages sont de type humide et comportent par exemple entre deux et sept disques de friction, de préférence trois ou quatre disques de friction. De tels embrayages multi-disques permettent de limiter la hauteur radiale du dispositif de transmission de couple.

Le premier embrayage de sortie 20, le deuxième embrayage de sortie 30 et l'embrayage d'entrée 10 sont disposés radialement les uns à l'intérieur des autres. Autrement dit, il existe un plan perpendiculaire à l'axe de rotation qui coupe à la fois les embrayages de sortie 20, 30 et l'embrayage d'entrée 10.

Ici, l'embrayage d'entrée 10 est disposé radialement à l'intérieur du deuxième embrayage de sortie 30 qui est disposé radialement à l'intérieur du premier embrayage de sortie 20.

Le dispositif 1 comprend un organe d'actionnement 14 et un organe de transmission de force 15 associé à l'embrayage d'entrée 10. Un organe de maintien en position débrayée peut être prévu pour repousser l'organe de transmission de force 15 de l'embrayage d'entrée 10.

L'organe de transmission de force 15 est mobile axialement pour transmettre l'effort d'embrayage de l'organe d'actionnement 14 vers l'embrayage d'entrée 10. L'organe de transmission de force exerce un effort axial sur l'ensemble multidisque 13 pour déplacer les plateaux vers les disques. L'actionnement est ainsi de type « poussé ».

L'organe de transmission de force 15 est de forme annulaire et comporte une jupe cylindrique intérieure 40 d'orientation axiale, une portion extérieure 41 d'orientation axiale et une portion de liaison 42 reliant la jupe cylindrique intérieure 40 et la portion extérieure 41. La portion extérieure 41 d'orientation axiale est, dans les modes de réalisation représentés, une jupe cylindrique extérieure 41. Toutefois, dans d'autres modes de réalisation, la portion extérieure 41 d'orientation axiale comporte une pluralité de doigts.

L'organe de transmission de force 15 comprend également une surface d'appui 47 d'orientation radiale situé à une extrémité de la jupe cylindrique inférieure 40. La surface d'appui 47 est en contact avec un élément de l'organe d'actionnement 14 ce qui permet de transmettre l'effort d'embrayage venant de l'organe d'actionnement vers la jupe cylindrique extérieure 41. En effet, la jupe cylindrique extérieure 41 est apte à venir en contact axialement avec un plateau de l'ensemble multidisque lorsque l'organe de transmission de force 15 est déplacé de sa position débrayé vers sa position embrayé, afin de transmettre l'effort d'embrayage à l'ensemble multidisque.

L'organe de transmission de force 15 est placé à l'avant de l'ensemble multidisque 13 tandis que l'élément de réaction 16 est placé à l'arrière de l'ensemble multidisque 13.

Ainsi, dans la position embrayée de l'embrayage d'entrée 10, l'organe de transmission de force 15 est déplacé axialement de l'avant vers l'arrière de manière à transmettre un effort d'embrayage sur l'ensemble multidisque 13 tendant à rapprocher les plateaux et disques de friction de l'élément de réaction 16. Lorsque le plateau adjacent à l'élément de réaction 16 rentre en contact avec la zone d'appui 18, l'élément de réaction 16 exerce alors un effort de réaction sur l'ensemble multidisque 13 opposé à l'effort d'embrayage, soit de l'arrière vers l'avant. De cette manière, les plateaux et les disques de friction de l'ensemble multidisque 13 sont pincées entre l'élément de réaction 16 et l'organe de transmission de force 15 à l'aide de l'effort de réaction et de l'effort d'embrayage ce qui permet de transmettre le couple entre les plateaux et les disques de friction et donc entre l'élément d'entrée 2 et l'élément intermédiaire 5.

L'organe d'actionnement 14 comprend un piston annulaire et une butée tournante, qui est ici un palier à roulement 17, portée par le piston et coopérant avec la surface d'appui 47 de l'organe de transmission de force 15.

Le dispositif 1 comprend également un organe d'actionnement 24 et un organe de transmission de force 25 associé au premier embrayage de sortie 20. L'organe de transmission de force 25 est mobile axialement pour transmettre l'effort d'embrayage de l'organe d'actionnement 24 vers les disques de friction et plateaux du premier embrayage de sortie 20.

Le dispositif 1 comprend également un organe d'actionnement 34 et un organe de transmission de force 35 associé au deuxième embrayage de sortie 30. L'organe de transmission de force 35 est mobile axialement pour transmettre l'effort d'embrayage de l'organe d'actionnement 34 vers les disques de friction et plateaux du deuxième embrayage de sortie 30.

Les organes de transmission de force 25, 35 sont placés à l'arrière des ensembles multidisques 23, 33 tandis que les éléments de réaction 26, 36 sont placés à l'avant des ensembles multidisques 23, 33.

Dans la position embrayée des embrayages de sortie 20, 30, les organes de transmission de force 25, 35 et les éléments de réactions 26, 36 agissent de manière similaire à ceux de l'embrayage d'entrée 10.

Des organes de maintien en position débrayée peuvent être prévus pour repousser les organes de transmission de force 25, 35 des embrayages de sortie 20, 30.

Les organes d'actionnement 24, 34 des embrayages de sortie 20, 30, en particulier leur chambre d'actionnement sont disposés radialement l'un à l'intérieur de l'autre. Les organes d'actionnement 24, 34 des embrayages de sortie 20, 30 sont d'un côté, axialement parlant, des premier et deuxième éléments de sortie 3, 4 et l'organe d'actionnement 14 de l'embrayage d'entrée 10 est de l'autre côté des premier et deuxième éléments de sortie 3, 4.

Les organes de transmission de force 25, 35 des embrayages de sortie 20, 30 présentent chacun une portion extérieure définissant une surface d'appui pour exercer l'effort axial sur les ensembles multidisques, 23, 33.

L'élément intermédiaire 5 comprend également une zone de connexion électrique 6 apte à être entrainée en rotation par une machine électrique tournante via une couronne autour d'un axe parallèle à l'axe X. La zone de connexion électrique 6 est ici décalée axialement des embrayages 10, 20, 30. La zone de connexion électrique 6 est apte à coopérer directement avec un pignon ménagé sur la couronne.

Les portes-disques de sortie 22, 32 du premier embrayage de sortie 20 et du deuxième embrayage de sortie 30 comporte une jupe périphérique cannelée permettant d'accoupler en rotation les disques de friction de l'ensemble multidisque 23 et de l'ensemble multidisque 33 respectivement. Les portes-disques d'entrée 21, 31 du premier embrayage de sortie 20 et du deuxième embrayage de sortie 30 comporte également une jupe périphérique cannelée permettant d'accoupler en rotation les plateaux de l'ensemble multidisque 23 et de l'ensemble multidisque 33 respectivement.

Dans le premier mode de réalisation illustré figure 1 et dans le deuxième mode de réalisation illustré figure 5, le porte-disque d'entrée 11 de l'embrayage d'entrée 10 comporte une jupe périphérique cannelée permettant d'accoupler en rotation les plateaux de l'ensemble multidisque 23 et le porte-disque de sortie 12 comporte une jupe périphérique cannelée permettant d'accoupler en rotation les disques de friction de l'ensemble multidisque 13.

Dans le troisième mode de réalisation illustré figure 8 et contrairement aux deux premiers modes de réalisation, les plateaux de l'ensemble multidisque 13 sont accouplés en rotation avec le porte-disque de sortie 12 et les disques de friction sont accouplés en rotation avec le porte-disque d'entrée 11.

De manière à appuyer uniformément sur les plateaux de l'ensemble multidisque 13, 23, 33 et à éviter que l'organe de transmission 15, 25, 35 se déloge de sa position, l'organe de transmission est centré par rapport à l'axe X et notamment par rapport au porte-disque qui est accouplé avec les plateaux. En effet, l'organe de transmission 15, 25, 35 exerçant un effort sur les plateaux, pour éviter tout risque d'usure ou de casse, l'organe de transmission 15, 25, 35 est en contact avec le porte-disque accouplé avec les plateaux.

Pour cela, l'organe de transmission 25 du premier embrayage de sortie 20 et l'organe de transmission 35 du deuxième embrayage de sortie 30 passe au travers d'un orifice ménagé dans l'élément intermédiaire 5 qui est associé au porte-disque d'entrée 21 du deuxième embrayage 20 et au porte-disque d'entrée 31 du troisième embrayage 30. Ainsi, les organes de transmission 25, 35 sont accouplés en rotation avec l'élément intermédiaire 5 et sont centrés par rapport aux porte-disques où sont accouplés les plateaux.

Cependant, dans le cas de l'organe de transmission 15, il n'est pas possible de réaliser un orifice dans le porte-disque ou bien dans la portion de support porteur du porte-disque puisque l'organe de transmission 15 est situé à l'avant du dispositif de transmission de couple 1 et qu'il ne croise pas ces éléments.

De manière à centrer l'organe de transmission 15, celui-ci comprend des portions radiales 43 faisant saillies radialement en direction du porte-disque accouplé aux plateaux. Les portions radiales 43 sont radialement en contact contre le porte-disque accouplé aux plateaux de manière à centrer radialement l'organe de transmission de force par rapport au porte-disque. Pour centrer de manière optimale l'organe de transmission 15 tout en limitant les coûts de fabrication, l'organe de transmission 15 comprend trois portions radiales 43 régulièrement réparties tout autour de l'axe X.

Dans le premier mode de réalisation illustré sur les figures 1 à 4, les portions radiales 43 sont sous la forme de pattes 44, 45 faisant saillie de la jupe cylindrique intérieure 40 et en contact avec le porte-disque d'entrée 11. Les pattes peuvent être des pattes 44 dites males, comme illustrées sur la figure 3, c'est-à-dire comprenant un seul élément formant saillie entouré de deux creux, l'élément formant saillie se logeant dans une cannelure du porte-disque d'entrée 11. Les pattes peuvent également être des pattes 45 dites femelles, comme illustrées sur la figure 4, c'est-à-dire comprenant deux éléments formant saillie espacés par un creux, les éléments formant saillie se logeant dans deux cannelures directement adjacentes du porte-disque d'entrée 11. Les pattes 44, 45 sont réalisées par découpe de matière dans la jupe cylindrique intérieure 40 puis orientées radialement par pliage par exemple. Les pattes 44, 45 ont donc dans ce mode de réalisation une forme complémentaire aux cannelures du porte-disque d'entrée 11 permettant de réaliser à la fois le centrage de l'organe de transmission 15 mais également l'entraînement en rotation de l'organe de transmission 15 avec le porte-disque d'entrée 11.

Dans le deuxième mode de réalisation illustré sur les figures 5 à 7, les portions radiales 43 sont sous la forme de bossages 46 faisant saillie de la jupe cylindrique intérieure 40 et en contact avec le porte-disque d'entrée 11. Contrairement aux pattes 44, 45, les bossages 46 ne sont pas logés dans les cannelures mais sont en contact avec le haut de la cannelure. Les bossages sont réalisés par emboutissage de la jupe cylindrique intérieure 40 de manière à déformer la jupe cylindrique intérieure 40 en direction du porte-disque d'entrée 11. Les bossages 46 permettent donc dans ce mode de réalisation de centrer l'organe de transmission 15 par rapport au porte-disque d'entrée 15 mais également permettent le passage d'huile dans toutes les cannelures facilitant la recirculation de l'huile.

Dans le troisième mode de réalisation illustré sur les figures 8 à 11, les plateaux sont portés par le porte-disque de sortie 12. Les portions radiales 43 de ce mode de réalisation sont donc réalisées sur la jupe cylindrique extérieure 41 qui est plus proche du porte disque de sortie 12. Les portions radiales sont sous la forme de pattes 44, 45 faisant saillie de la jupe cylindrique extérieure 41 et en contact avec le porte-disque de sortie 12. Les pattes peuvent être des pattes 44 dites males, comme illustrées sur la figure 11, c'est-à-dire comprenant un seul élément formant saillie entouré de deux creux, l'élément formant saillie se logeant dans une cannelure du porte-disque de sortie 12. Les pattes peuvent également être des pattes 45 dites femelles, comme illustrées sur la figure 10, c'est-à-dire comprenant deux éléments formant saillie espacés par un creux, les éléments formant saillie se logeant dans deux cannelures directement adjacentes du porte-disque de sortie 12. Les pattes 44, 45 sont réalisées par découpe de matière dans la jupe cylindrique extérieure 41 puis orientées radialement par pliage par exemple. Les pattes 44, 45 ont donc dans ce mode de réalisation une forme complémentaire aux cannelures du porte-disque de sortie 12 permettant de réaliser à la fois le centrage de l'organe de transmission 15 mais également l'entraînement en rotation de l'organe de transmission 15 avec le porte-disque de sortie 12.

L'usage du verbe « comporter », « comprendre » ou « inclure » et de ses formes conjuguées n'exclut pas la présence d'autres éléments ou d'autres étapes que ceux énoncés dans une revendication.

Dans les revendications, tout signe de référence entre parenthèses ne saurait être interprété comme une limitation de la revendication.

## Revendications

1. Embrayage multidisque (10, 20, 30), notamment pour véhicule automobile, présentant un axe X de rotation et comprenant :
- un premier porte-disque (11, 12, 21, 22, 31, 32),
- un deuxième porte-disque (11, 12, 21, 22, 31, 32),
- un ensemble multidisque (13, 23, 33) comprenant au moins un disque de friction solidaire en rotation autour de l'axe X du deuxième porte-disque (11, 12, 21, 22, 31, 32), au moins deux plateaux respectivement disposés de part et d'autre de l'au moins un disque de friction, les deux plateaux étant solidaires en rotation autour de l'axe X du premier porte-disque (11, 12, 21, 22, 31, 32) ;
- un organe d'actionnement (14, 24, 34) configuré pour délivrer un effort d'embrayage ; et
- un organe de transmission de force (15) mobile en translation selon l'axe X qui coopère d'une part avec l'organe d'actionnement (14, 24, 34) et d'autre part avec l'un des plateaux de manière à transmettre l'effort d'embrayage de l'organe d'actionnement (14, 24, 34) vers l'ensemble multidisque ;
dans lequel l'organe de transmission de force (15) comprend au moins deux portions radiales (43) faisant saillies radialement de l'organe de transmission **caractérisée par le fait que** les au moins deux portions radiales (43) font saillies radialement de l'organe de transmission en direction du premier porte-disque (11, 12, 21, 22, 31, 32), lesdites portions radiales (43) étant radialement en contact contre le premier porte-disque (11, 12, 21, 22, 31, 32) de manière à centrer radialement l'organe de transmission de force (15) par rapport au premier porte-disque (11, 12, 21, 22, 31, 32).

2. Embrayage multidisque (10, 20, 30) selon la revendication 1, dans lequel les portions radiales (43) sont réparties régulièrement tout autour de l'axe X sur l'organe de transmission de force (15).

3. Embrayage multidisque (10, 20, 30) selon la revendication 1 ou la revendication 2, dans lequel l'organe de transmission de force (15) est de forme annulaire et comprend une jupe cylindrique intérieure (40) d'orientation axiale s'étendant radialement à l'intérieur du premier porte disque, une surface d'appui (47) d'orientation radiale située à une extrémité de la jupe cylindrique intérieure (40) et étant en contact avec un élément de l'organe d'actionnement (14), une portion extérieure (41) d'orientation axiale apte à venir en contact axialement avec un plateau de l'ensemble multidisque (13) pour transmettre l'effort d'embrayage, et une portion de liaison (42) reliant lajupe cylindrique intérieure (40) et lajupe cylindrique extérieure (41).

4. Embrayage multidisque (10, 20, 30) selon la revendication 3, dans lequel l'une des portions radiales (43) fait saillie radialement de la jupe cylindrique intérieure (40).

5. Embrayage multidisque (10, 20, 30) selon la revendication 3 ou 4, dans lequel l'une des portions radiales (43) est un bossage (46) réalisé par emboutissage de la jupe cylindrique intérieure (40).

6. Embrayage multidisque (10, 20, 30) selon la revendication 1 ou la revendication 2, dans lequel l'organe de transmission de force (15) est de forme annulaire et comprend une surface d'appui (47) d'orientation radiale située à une extrémité de la jupe cylindrique intérieure (40) et étant en contact avec un élément de l'organe d'actionnement (14) et une portion extérieure (41) d'orientation axiale apte à venir en contact axialement avec un plateau de l'ensemble multidisque (13) pour transmettre l'effort d'embrayage.

7. Embrayage multidisque (10, 20, 30) selon la revendication 6, dans lequel l'une des portions radiales (43) fait saillie radialement d'une surface extérieure de la portion extérieure (41).

8. Embrayage multidisque (10, 20, 30) selon l'une des revendications 1 à 7, dans lequel le premier porte-disque (11, 12) est munie d'une section cannelée avec des cannelures sur tout le pourtour de la section, et l'une des portions radiales (43) de l'organe de transmission de force (15) est logée dans au moins l'une des cannelures.

9. Embrayage multidisque selon la revendication 8, dans lequel l'une des portions radiales (43) est une patte (44, 45) réalisée par découpe de matière, la patte (44, 45) ayant une forme complémentaire à au moins l'une des cannelures du premier porte-disque (11, 12).

10. Ensemble multidisque selon la revendication 9, dans lequel la patte (45) comporte deux éléments faisant saillie séparés par un creux, les deux éléments faisant saillie se logeant dans deux cannelures adjacentes du premier porte-disque (11, 12).

## Patentansprüche

1. Lamellenkupplung (10, 20, 30), insbesondere für ein Kraftfahrzeug, welche eine Drehachse X aufweist und umfasst:
- einen ersten Lamellenträger (11, 12, 21, 22, 31, 32),
- einen zweiten Lamellenträger (11, 12, 21, 22, 31, 32),
- eine Lamellenanordnung (13, 23, 33), die wenigstens eine Reiblamelle, die drehfest um die Achse X mit dem zweiten Lamellenträger (11, 12, 21, 22, 31, 32) verbunden ist, und wenigstens zwei Platten, die beiderseits der wenigstens einen Reiblamelle angeordnet sind, umfasst, wobei die zwei Platten drehfest um die Achse X mit dem ersten Lamellenträger (11, 12, 21, 22, 31, 32) verbunden sind;
- ein Betätigungsorgan (14, 24, 34), das dafür ausgelegt ist, eine Kupplungskraft zu liefern; und
- ein entlang der Achse X translatorisch bewegbares Kraftübertragungsorgan (15), welches einerseits mit dem Betätigungsorgan (14, 24, 34) und andererseits mit einer der Platten zusammenwirkt, um die Kupplungskraft des Betätigungsorgans (14, 24, 34) auf die Lamellenanordnung zu übertragen;
wobei das Kraftübertragungsorgan (15) wenigstens zwei radiale Abschnitte (43) umfasst, die von dem Übertragungsorgan aus radial vorstehen,
**dadurch gekennzeichnet, dass** die wenigstens zwei radialen Abschnitte (43) von dem Übertragungsorgan aus in Richtung des ersten Lamellenträgers (11, 12, 21, 22, 31, 32) radial vorstehen, wobei die radialen Abschnitte (43) mit dem ersten Lamellenträger (11, 12, 21, 22, 31, 32) derart radial in Kontakt stehen, dass sie das Kraftübertragungsorgan (15) in Bezug auf den ersten Lamellenträger (11, 12, 21, 22, 31, 32) radial zentrieren.

2. Lamellenkupplung (10, 20, 30) nach Anspruch 1, wobei die radialen Abschnitte (43) gleichmäßig um die Achse X herum auf dem Kraftübertragungsorgan (15) verteilt sind.

3. Lamellenkupplung (10, 20, 30) nach Anspruch 1 oder Anspruch 2, wobei das Kraftübertragungsorgan (15) ringförmig ist und einen axial ausgerichteten inneren zylindrischen Kragen (40), der sich radial ins Innere des ersten Lamellenträgers erstreckt, eine radial ausgerichtete Anlagefläche (47), die sich an einem Ende des inneren zylindrischen Kragens (40) befindet und mit einem Element des Betätigungsorgans (14) in Kontakt steht, einen axial ausgerichteten äußeren Abschnitt (41), der geeignet ist, axial mit einer Platte der Lamellenanordnung (13) in Kontakt zu kommen, um die Kupplungskraft zu übertragen, und einen Verbindungsabschnitt (42), der den inneren zylindrischen Kragen (40) und den äußeren zylindrischen Kragen (41) verbindet, umfasst.

4. Lamellenkupplung (10, 20, 30) nach Anspruch 3, wobei einer der radialen Abschnitte (43) von dem inneren zylindrischen Kragen (40) aus radial vorsteht.

5. Lamellenkupplung (10, 20, 30) nach Anspruch 3 oder 4, wobei einer der radialen Abschnitte (43) eine Erhebung (46) ist, die durch Tiefziehen des inneren zylindrischen Kragens (40) hergestellt ist.

6. Lamellenkupplung (10, 20, 30) nach Anspruch 1 oder Anspruch 2, wobei das Kraftübertragungsorgan (15) ringförmig ist und eine radial ausgerichtete Anlagefläche (47), die sich an einem Ende des inneren zylindrischen Kragens (40) befindet und mit einem Element des Betätigungsorgans (14) in Kontakt steht, und einen axial ausgerichteten äußeren Abschnitt (41), der geeignet ist, axial mit einer Platte der Lamellenanordnung (13) in Kontakt zu kommen, um die Kupplungskraft zu übertragen, umfasst.

7. Lamellenkupplung (10, 20, 30) nach Anspruch 6, wobei einer der radialen Abschnitte (43) von einer äußeren Fläche des äußeren Abschnitts (41) aus radial vorsteht.

8. Lamellenkupplung (10, 20, 30) nach einem der Ansprüche 1 bis 7, wobei der erste Lamellenträger (11, 12) mit einem ausgekehlten Teilabschnitt mit Auskehlungen auf dem gesamten Umfang des Teilabschnitts versehen ist und einer der radialen Abschnitte (43) des Kraftübertragungsorgans (15) in wenigstens einer der Auskehlungen aufgenommen ist.

9. Lamellenkupplung nach Anspruch 8, wobei einer der radialen Abschnitte (43) eine Lasche (44, 45) ist, die durch Schneiden von Material hergestellt ist, wobei die Lasche (44, 45) eine Form aufweist, die zu wenigstens einer der Auskehlungen des ersten Lamellenträgers (11, 12) komplementär ist.

10. Lamellenanordnung nach Anspruch 9, wobei die Lasche (45) zwei vorstehende Elemente aufweist, die durch eine Ausnehmung getrennt sind, wobei die zwei vorstehenden Elemente in zwei benachbarten Auskehlungen des ersten Lamellenträgers (11, 12) aufgenommen sind.

## Claims

1. Multidisc clutch (10, 20, 30), in particular for a motor vehicle, having an axis of rotation X and comprising:
- a first disc carrier (11, 12, 21, 22, 31, 32),
- a second disc carrier (11, 12, 21, 22, 31, 32),
- a multidisc assembly (13, 23, 33) comprising at least one friction disc coupled in rotation, about the axis X, with the second disc carrier (11, 12, 21, 22, 31, 32), at least two plates respectively arranged on either side of the at least one friction disc, the two plates being coupled in rotation, about the axis X, with the first disc carrier (11, 12, 21, 22, 31, 32);
- an actuating member (14, 24, 34) that is configured to provide an engagement force; and
- a force transmission member (15) that is able to move in translation along the axis X and cooperates on one hand with the actuating member (14, 24, 34) and on the other hand with one of the plates so as to transmit the engagement force from the actuating member (14, 24, 34) to the multidisc assembly;
wherein the force transmission member (15) comprises at least two radial portions (43) that project radially from the transmission member,
**characterized by** the fact that the at least two radial portions (43) project radially from the transmission member towards the first disc carrier (11, 12, 21, 22, 31, 32), said radial portions (43) being radially in contact against the first disc carrier (11, 12, 21, 22, 31, 32) so as to radially centre the force transmission member (15) with respect to the first disc carrier (11, 12, 21, 22, 31, 32).

2. Multidisc clutch (10, 20, 30) according to Claim 1, wherein the radial portions (43) are regularly distributed all about the axis X on the force transmission member (15).

3. Multidisc clutch (10, 20, 30) according to Claim 1 or Claim 2, wherein the force transmission member (15) is annular in shape and comprises an axially oriented inner cylindrical skirt (40) extending radially within the first disc carrier, a radially oriented pressure surface (47) located at one end of the inner cylindrical skirt (40) and in contact with an element of the actuating member (14), an axially oriented outer portion (41) that is able to come into axial contact with a plate of the multidisc assembly (13) in order to transmit the engagement force, and a connecting portion (42) connecting the inner cylindrical skirt (40) and the outer cylindrical skirt (41).

4. Multidisc clutch (10, 20, 30) according to Claim 3, wherein one of the radial portions (43) projects radially from the inner cylindrical skirt (40).

5. Multidisc clutch (10, 20, 30) according to Claim 3 or 4, wherein one of the radial portions (43) is a boss (46) created by stamping the inner cylindrical skirt (40).

6. Multidisc clutch (10, 20, 30) according to Claim 1 or Claim 2, wherein the force transmission member (15) is annular in shape and comprises a radially oriented pressure surface (47) located at one end of the inner cylindrical skirt (40) and in contact with an element of the actuating member (14) and an axially oriented outer portion (41) able to come into axial contact with a plate of the multidisc assembly (13) in order to transmit the engagement force.

7. Multidisc clutch (10, 20, 30) according to Claim 6, wherein one of the radial portions (43) projects radially from an outer surface of the outer portion (41) .

8. Multidisc clutch (10, 20, 30) according to one of Claims 1 to 7, wherein the first disc carrier (11, 12) is provided with a splined section with splines over the entire periphery of the section, and one of the radial portions (43) of the force transmission member (15) is received in at least one of the splines.

9. Multidisc clutch according to Claim 8, wherein one of the radial portions (43) is a tab (44, 45) created by cutting of material, the tab (44, 45) having a shape that matches at least one of the splines of the first disc carrier (11, 12).

10. Multidisc assembly according to Claim 9, wherein the tab (45) comprises two projecting elements separated by a hollow, the two projecting elements being received in two adjacent splines of the first disc carrier (11, 12).
